# EUROPEAN PATENT APPLICATION

(11) **EP 4 530 919 A1**
(43) Date of publication of application: **02.04.2025**
(21) Application number: 24202734.0
(22) Date of filing: 26.09.2024
(51) Int. Cl.: G06F 40/103, G06F 40/30

(54) **METHOD AND APPARATUS FOR TRANSLATING TEXT INTO A SEQUENCE OF CHARACTERS INCLUDING GRAPHICAL SYMBOLS**

(30) Priority: 28.09.2023 US 202318374625
(71) Applicant: Ecole Polytechnique Fédérale de Lausanne (EPFL), 1015 Lausanne (CH)
(72) Inventor: West, Robert, 1008 Jouxtens-Mézery (CH); Klein, Lars, 1025 St-Sulpice (CH); Aydin, Roland, 21524 Brunstorf (DE)
(74) Representative: Vesterinen, Jussi Tapio

(57) **Abstract**

A computer-implemented method for translating an input text element into a sequence of characters comprising a set of graphical symbols. The method comprises the steps of: selecting (12) one or more words out of the input text element as pre-processed or unprocessed to be translated to obtain a word selection; marking (12) the word selection; translating (13) the word selection identified by the marking into at least a set of graphical symbols by using an artificial intelligence language model considering the context of the word selection in the pre-processed text element to dynamically translate the word selection based on the context to obtain a translated word selection, wherein a given word in the word selection is translated into a sequence of at least two graphical symbols; and displaying (15) the input text element as translated to a user, wherein the input text element as translated comprises the translated word selection.

## Description

### TECHNICAL FIELD

The present invention relates to a computer-implemented method for translating text into a sequence of characters including graphical symbols, such as emojis. The invention also relates to a corresponding computer program product and an apparatus for implementing the method.

### BACKGROUND OF THE INVENTION

An emoji is a pictogram, logogram, ideogram, or smiley embedded in text and typically used in electronic messages and web pages. Emojis can be understood as small images, symbols, or icons used in text fields in electronic communication (as in text messages, email, and social media) to express the emotional attitude of the writer, convey information succinctly, communicate a message playfully without using words. Emojis are often used to fill in emotional cues otherwise missing from typed conversation. Emojis exist in various genres, including for instance facial expressions, common objects, places and types of weather, and animals. As opposed to emoticons, emoji are pictures rather than typographic approximations.

Emojis have permeated our daily communication. They are useful to emphasize or clarify emotions. They can also provide additional details to a conversation, and sometimes they can simply serve for decorative purposes in the text. This casual use barely scratches the surface of their expressive power. There are more than 3600 emojis in the latest Unicode standard, including a wide variety of items, activities and symbols.

State-of-the-art computer-implemented solutions for adding emojis to a text have many limitations. For example, these solutions typically do not rely on artificial intelligence. They use look-up tables to replace a word with an emoji without trying to properly analyze the context where the word to be replaced is used. Furthermore, texts including emojis fail to make these texts more understandable as emojis are traditionally provided merely for expressing emotions. Moreover, the existing solutions fail to translate a source text into emojis.

### SUMMARY OF THE INVENTION

It is an object of the present invention to overcome at least some of the problems identified above related to modifying texts by including emojis or other graphical symbols. More specifically, one of the objects of the present invention is to propose a new solution for translating text into a sequence of characters including graphical symbols, such as emojis for instance.

According to a first aspect of the invention, there is provided a computer-implemented method for translating text into a sequence of characters comprising graphical symbols as recited in claim 1.

The proposed solution provides a translation method for emoji language. The solution translates natural-language text into a sequence of characters according to the teachings of the present invention. The proposed solution goes beyond the immediate meaning of an emoji and handles more complex compound words and concepts: as an example, "dog sledding" is translated to a sequence of one or more dog emojis, an emoji representing a snowflake, and an emoji representing a sledge.

The proposed solution is designed to work "in-context", and it takes into consideration the context around the word(s) to be translated. This context may include surrounding sentences or paragraphs. Furthermore, this context may take into consideration the text preceding the word to be translated and/or the text following the word to be translated. This information may be used in two ways:
1) To disambiguate the meaning of a word. For example, in the following sentence we may want to annotate the word "season", which implicitly refers to a baseball season. The proposed solution understands that we are not dealing with spring/summer/fall/winter and produces the following example annotation: The forthcoming season "an emoji representing a baseball", "an emoji representing a wall calendar", and "an emoji representing a happy face" in Pittsburgh promises to be of unusual interest to the players. The translations that are produced are stochastic and subject to changes/improvements over time.
2) To test whether the annotations that are produced are helpful. For this purpose, we may simulate how a human reader would translate from emoji language to human language. Being able to translate text in both directions, from a source language to emoji language, and back, is an optional additional capability of the proposed solution.

The proposed solution is also fully automatic. No human annotators are needed. Since we do not rely on a human in the loop, we can apply the proposed solution to large text corpora, such as ebooks, websites, etc. One contribution is to simulate human understanding of annotated text by prompting a large language model.

We propose that graphical symbol annotations can help with text comprehension and language learning. By annotating words that may be unknown, we make it easier to read complex texts. When reading text in a foreign language, our graphical symbol annotations will provide an intuitive visual aid that helps extend the readers vocabulary. Beyond helping students to learn a foreign language, we propose graphical symbol annotations as a playful and engaging support for children who are just learning to read, or for supporting text understanding on behalf of people who have difficulty reading (e.g., dyslexia).

The proposed solution thus implements a new algorithm, the implementation or design of which is motivated by technical considerations of the internal functioning of the computer system or network on which the algorithm will run.

According to a second aspect of the invention, there is provided a non-transitory computer program product comprising instructions for implementing the steps of the method according to the first aspect of the present invention when loaded and run on computing means of a data processing device.

According to a third aspect of the invention, there is provided a translation apparatus configured to implement the method according to the first aspect of the invention.

Other aspects of the invention are recited in the dependent claims attached hereto.

### BRIEF DESCRIPTION OF THE DRAWINGS

Other features and advantages of the invention will become apparent from the following description of non-limiting example embodiments, with reference to the appended drawings, in which:
- Figure 1 schematically shows a block diagram of a translation apparatus configured to translate text into a sequence of characters including graphical symbols according to an example embodiment of the present invention;
- Figure 2 illustrates a table showing some example translations;
- Figure 3 illustrates a text translation method, where a translation operation according to a multi-shot scheme is used; and
- Figure 4 is a flow chart summarizing the proposed text translation method according to an example of the present invention.

### DETAILED DESCRIPTION OF EMBODIMENTS OF THE INVENTION

Some embodiments of the present invention will now be described in detail with reference to the attached figures. As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." Furthermore, the term "comprise" is used herein as an open-ended term. This means that the object encompasses all the elements listed, but may also include additional, unnamed elements. Thus, the word "comprise" is interpreted by the broader meaning "include", "contain" or "comprehend". The word character is to be understood broadly in the present description, and may be used to refer to a letter, number, or other symbol. On the other hand, a graphical symbol may be understood to be a visual character, icon or image, i.e., a symbol that is not a letter, number or punctuation mark. Identical or corresponding functional and structural elements which appear in the different drawings are assigned the same reference numerals. It is to be noted that the use of words "first", "second" and "third", etc. may not imply any kind of particular order or hierarchy unless this is explicitly or implicitly made clear in the context.

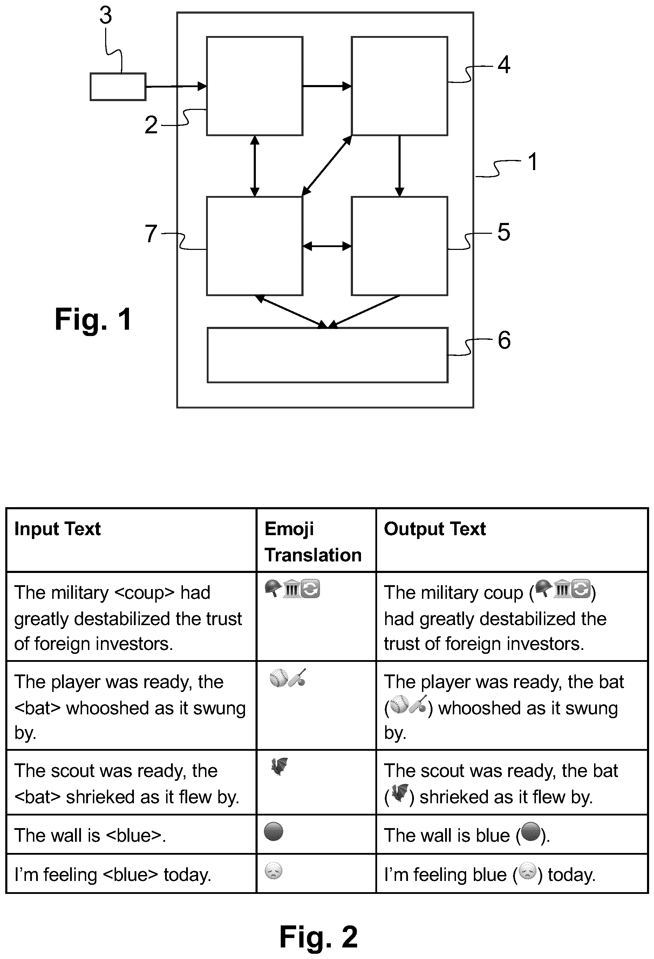

Figure 1 shows an example apparatus or device 1 that is configured to implement the proposed text translation method. Only some functional elements of the apparatus are shown, which are useful for understanding the teachings of the present invention. The apparatus comprises a data pre-processing unit or module 2 configured to pre-process an input text document 3. The pre-processing operation may comprise one or more of the following operations: split the input text into sentences, tokenize the input text, and lemmatize the input text. The pre-processed text is then configured to be fed into a word selection unit or module 4, which is configured to select one or more words or one or more word sequences to be translated. This selection is done based on one or more selection criteria as explained later in more detail. The output of the word selection module is formed by the pre-processed text, which further highlights or marks the word or words that need to be translated. The marking may be implemented with a tag pointing to the word or words to be translated.

The output of the word selection module 4 is configured to be fed into a translation unit or module 5, which is configured to implement the actual word translation process as explained later in more detail. The word "translation" is in the present description to be understood broadly. For instance, the word "translation" covers the operation of annotating one or more words, while also keeping the original words to be annotated. In this case, the words to be annotated are appended (adding before, after, above, or below the word or words to be annotated) with one or more graphical characters or symbols, which in the present example are emojis. The word "translation" also covers the operation of replacing the word or words to be translated with one or more graphical symbols. The added symbols may be made constantly visible, or alternatively they may be made visible only if this is triggered by a given action. The triggering action may for instance be a cursor hovering operation such that the emojis are only made visible once the reader or user hovers a cursor over the word or words to be translated. In this case, the emojis may optionally again disappear as soon as the cursor is moved away from the location of the word or words to be translated. Eye tracking functionality may also or instead be added so that the translation, i.e., the emojis, are only made visible as soon as the eye tracking algorithm detects that the reader is looking at the translation. If the reader is no longer looking at the translation, then the translation may be hidden.

Figure 1 also shows a display unit or module 6, which is configured to display the translation result received from the translation module 5 to the reader. Figure 1 further shows a central processing unit 7 to coordinate the operation of the different modules and to allocate resources to the different modules of the apparatus 1.

The translation method is next explained in more detail. First, a set of text format or written input words (i.e., the text element 3) to be translated is received or selected. The text may for instance form the content of an ebook, a website, a news article, etc. The text to be translated may be of any length. As the proposed translation method is a computer-implemented method, the entire translation method can typically be completed within seconds, sometimes even quicker if powerful computational resources, such as cloud computing solutions, are available. Once the text is selected, it is pre-processed. Given the text document 3, semantic blocks of coherent text are first identified. Where applicable, existing meta-information from the text can be leveraged for this purpose: for instance, websites and ebooks contain information at paragraph boundaries. Furthermore, custom applications can also be relied on to separate the text document 3 into individual sentences and then group neighboring sentences into a small block of coherent text. The same applications may further pre-process this text into a list of individual tokens (words, punctuation marks, proper names, etc.). The individual tokens may form or be comprised in the units that can be translated according to the present invention. For instance, let us consider the following sentence: "I'm walking my dog." In this example, the units for translation could be: "I'm", "walking", "my", "dog". Alternatively, the units for translation could be "I'm walking", "my dog", or "walking my dog". The units that we consider for translation may overlap, and any part of the original text can be translated. Furthermore, the translation units are processed in context. The translation will rely on the text before and optionally after the unit. The pre-processing operation may involve one or more of the following operations: split the text into a set or sequence of sentences, tokenize the text, and lemmatize the text. Lemmatization operation, which is optional, aims to reduce different word forms and sometimes derivationally related word forms to a common base form. For example, by lemmatizing the different forms "builds", "building", or "built", they can be reduced to the lemma "build".

Once the text has been pre-processed, the word or words to be translated are selected based on one or more selection criteria. In this example, the proposed translation method is used to increase the readability of the text 3. By providing an intuitive visual aid, we help the reader to understand complex words. Measuring the complexity of a word can be done in multiple ways:
1. Common European Framework of Reference for Languages (CEFR) provides vocabulary lists corresponding to various difficulty levels, from A1 to C2. We can lemmatize the text read by the reader, compare it against such a difficulty list, and then translate the words of higher than usual difficulty.
2. Inverse corpus frequency can be used as a proxy measure to determine how surprised a reader will be by a specific word. In other words, the method may decide to translate the words that appear rarely. Similarly, the perplexity of a language model can be used to describe how unusual a word is.
3. There exist various measures for readability. Typically, such measures take into consideration the number of letters or syllables in a word. The method may decide to translate words that are difficult to read according to a given metric.

The proposed method may also be used to learn a foreign language. The method may optionally be combined with a mechanism for spaced repetition. Spaced repetition in this context is a mechanism or method of translating certain words at systematic or uneven intervals. At the beginning of the learning process, the intervals are typically spaced closely together. As the reader progresses with the text 3, the intervals become systematically longer. The interval may be measured in terms of time or in terms of number of intermittent words, for instance. A tutor algorithm may be used to determine when a certain word should be translated. The translation process is then applied to the next occurrence of this word.

Now that the word or words to be translated are selected according to a given criterion or criteria, the selected words can next be translated. Two translation options are foreseen according to the present example, namely a single-shot translation process and a multi-shot translation process. The main difference between these translation options is that in the process according to the single-shot translation scheme, only one translation candidate is generated per word or sequence of words to be translated, whereas in the process according to the multi-shot translation scheme, a plurality of translation candidates are generated per word or sequence of words to be translated, and then only one translation end result is selected out of the translation candidates to be shown to the reader.

The translation process according to both options thus translates In the present example arbitrary text into emoji language. The proposed method is able to disambiguate the meaning of a word from the context and uses the expressive power of emojis to represent even complex or very subtle meanings. The context in this example covers text portions before and after, in this case immediately before and after, the word or sequence of words to be translated. However, according to a variant, only the text portion before or only the text portion after the word or the sequence of words to be translated is taken into account when interpreting the meaning or semantics of the word or words to be translated.

The translation module 5 in this example uses a language model, and in particular a large language model (LLM) to implement this translation process. An LLM is an artificial intelligence (AI) language model characterized by its large size. Their size is enabled by AI accelerators, which can process vast amounts of text data. The built artificial neural networks can contain from tens of millions and up to hundreds of billions of weights and are (pre-)trained using self-supervised learning and semi-supervised learning. The transformer architecture contributes to faster training and better performance. The implementation of this language model may rely on one or more of the following insights:
- We carefully engineer a system prompt and induce the language model to follow patterns.
- We present the model with a series of demonstration examples without changing any system parameters. These examples are carefully curated emoji translations and demonstrate the concept of representing words with emojis.
- We instruct the model to format its output with JSON, this simplifies parsing results.
- The JSON output template that we show to the model also allows us to specify additional required outputs. In particular, at its output, we may ask the model to repeat the word that is to be translated. This helps to produce more well-defined outputs and focuses the model on the specific word which has been marked for translation.

Figure 2 shows some example input text portions that are fed into the translation module 5 in the column on the left, the translation result in the middle column, and the output text portions that are outputted by the translation module 5 in the column on the right. As can be seen, the words to be translated are tagged with a given set of characters, i.e., in this case with angle brackets <>. In this example, the emoji translation is optionally placed between a set of characters, which in this case are round brackets (). Figure 2 illustrates the translation process according to the single-shot translation process, where only one translation candidate is generated per word to be translated.

The multi-shot translation process is next explained in more detail. Generating emoji translations is a stochastic process. The single-shot translation process can be run multiple times to generate identically distributed but independent samples (i.e., translation candidates). A utility function can be used to assess the quality of each sample. A utility function is a mathematical function, which ranks alternatives, which in this case are the translation candidates, according to their utility to a reader. The multi-shot translation process is an extension of the single-shot translation process, which explores a plurality of different possible translations and then chooses the best one.

We propose to simulate whether a translation, which in this example is an emoji annotation, can help the reader to understand a word, by replacing a human-in-the-loop with a digital twin. This digital twin is based on an LLM. In this process, the part of the source text that has been translated into emojis is hidden and instead the emoji translation is displayed in its place. Then the language model is requested to reconstruct the original text. Similar to the single-shot translation process, this is a stochastic process. Multiple samples can be generated to estimate the chance of correctly guessing the original text based on its emoji translation. The same prompt engineering is in this example used for the multi-shot translation process as for the single-shot translation process. The probability of understanding the original (but hidden) part of the text is a utility function.

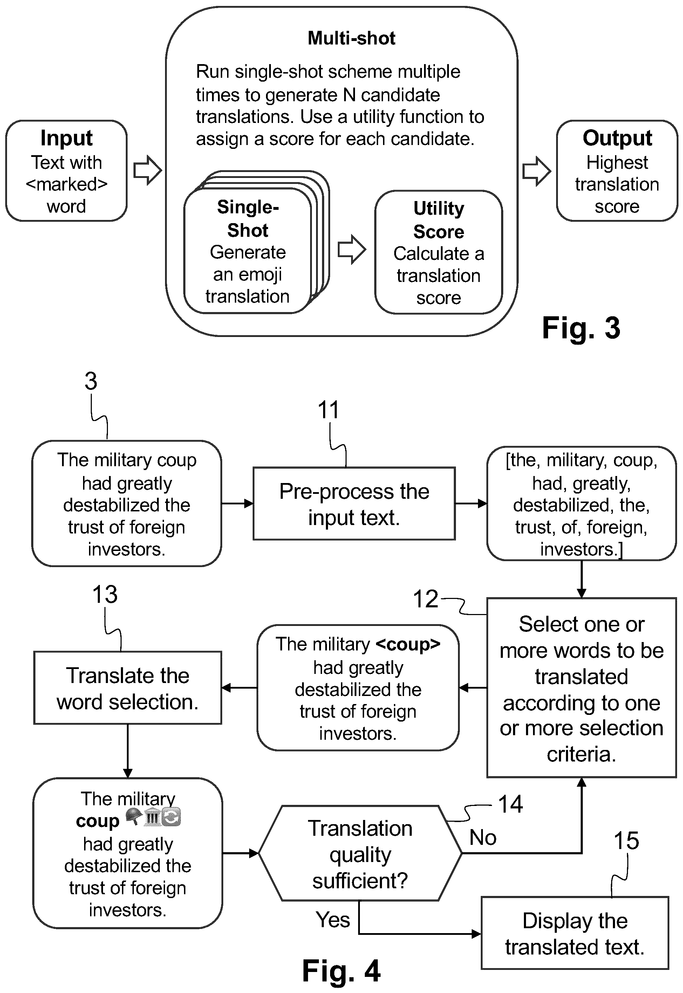

The translation method using the multi-shot translation process is illustrated in Figure 3. As shown in Figure 3, a utility function is used to assign a score for each translation candidate. The utility function may be based on one or more of the following aspects: guessability of the meaning of a given translation candidate to the reader, length of a given translation candidate (for instance a shorter translation (which may be measured in the number of emojis) may be better than a longer translation), the reader's familiarity with a given translation candidate (i.e., the generated emojis as a result of the translation), and the reader's previous exposure to a given translation candidate (i.e., the generated emojis as a result of the translation). Thus, in view of the above, according to one simple example, the score of a given translation candidate may depend for instance on the translation quality such that the more likely the reader is to guess correctly the translation, the higher the score is for this translation candidate.

The flow chart of Figure 4 summarizes the proposed text translation method. The following text element 3 is used in this specific example as an input file to the pre-processing module 2: "The military coup had greatly destabilized the trust of foreign investors." In step 11, the pre-processing module 2 pre-processes the text element 3. This step involves the operation of identifying possible units or words for translation, i.e., for emojification. This operation may comprise tokenizing and/or lemmatizing the text element 3. The pre-processing module 2 then outputs a pre-processed text to the selection module 4. In this case, the pre-processed text takes the following form: "[the, military, coup, had, greatly, destabilized, the, trust, of, foreign, investors.]" In step 12, the selection module 4 then selects one or more words or one or more translation units to be translated according to one or more selection criteria to obtain a word selection. The word selection may thus comprise one or more single words (e.g., "coup" or "investors") and/or one or more sequences of words (e.g., "military coup" or "foreign investors") to be translated. Many different selection strategies may be used. For instance, the selection criteria may be based on one or more of the following aspects:
- Select words that are difficult to read or comprehend;
- Use a tutor algorithm for spaced repetition to translate vocabulary that the user should be reminded of; and
- Select only words for which a high-quality translation is available.

Once the selection has been made by the selection module 4 or upon selecting the word or words, it marks the word or words that have been selected and feeds the marked text to the translation module 5. The marking is in this example done in step 12. In this specific example, the marked text is as follows: "The military <coup> had greatly destabilized the trust of foreign investors." In this case angle brackets are used to mark the selected word or words, but any other suitable marking or tagging mechanism may be used instead. In this example, the word "coup" was selected.

In step 13, the translation module dynamically translates the selected word or words, which forms a word selection, into a collection or set of emojis (or more broadly into a set of graphical symbols). In addition to the context of the word selection, the dynamic translation of the word selection may consider one or more of the following aspects: user's age, user's nationality, user's geographical location, time of the day, user's cultural background, and user's language skills. For instance, one might use only culturally suitable emojis in the translation, and which are also convenient when considering the user's age. Thus, the translation does not rely on static look-up tables. Not only the particular selection of emojis, but their specific order may be considered important. As explained above, either a single-shot process or a multi-shot process is used to translate the selected word or words. In this example, the word to be translated is annotated. In other words, the translated word is appended with a sequence of emojis, in this case three emojis. The translated word, which in this case is highlighted, is maintained in the text and is visible to the reader together with the annotation. However, the annotation may or may not be constantly visible. For instance, it may be made visible only once a pre-defined action is triggered as explained above.

In both translation processes, a utility function may optionally be used to assess the translation quality of the set of emojis. Thus, in step 14, the translation quality is optionally assessed. In this manner, a feedback loop can be introduced to inform the selection module 4 which words have high-quality translations. If in step 14 it is determined that the translation quality is not sufficient, then the method continues in step 12, where a new word or new words are selected instead of the previously selected one or ones for which it was discovered that no high-quality translations are available. If on the other hand in step 14 it is determined that the translation quality is sufficient, then the translated emojis are included in a translated word selection, and then in step 15, the translated text as output in step 13 is displayed to the user. The displayed translated text comprises the translated word selection.

The proposed method does not rely on human input, but it is nevertheless able to learn from human feedback. Optionally, we propose to occasionally display multiple emoji translations and gather feedback which one of them is most useful. This will allow us to collect valuable data which can be used to improve the demonstrations (i.e., the training translations) shown to the single-shot scheme large language model.

It is possible to extract many emoji translations from the proposed method and use them to train a new language model, or fine-tune a pre-trained language model or another machine learning model, specifically for the purpose of producing emoji translations. For this purpose, it is advantageous to have high-quality emoji translations. Human feedback can be used to improve the quality of the data.

We have implemented the single-shot and multi-shot translation schemes and evaluated their performance in a simulated study. For the study we consider randomly selected snippets of text from recent news articles. In each text, a random word is translated to emoji language, with both single-shot and multi-shot schemes. We then use a large language model to guess the hidden word:
- only from surrounding text (Baseline); and
- from surrounding text and emoji translation (testing single-shot and multi-shot scheme translations separately).

The average probability of guessing the hidden word correctly is marked in bold, a 95% confidence interval is given in brackets.

| **Method** | **Probability of guessing hidden word** (synonyms count as a correct guess) |
|---|---|
| Baseline | **0.65,** [0.56, 0.74] |
| Single-shot scheme | **0.79,** [0.71,0.87] |
| Multi-shot scheme | **0.87,** [0.8, 0.93] |

We have repeated the same study using crowdsourced human workers to guess the hidden word. The proposed method increases the average probability by 24%. The results are statistically significant:

| **Method** | **Probability of guessing hidden word** |
|---|---|
| Baseline | **0.306,** [0.1, 0.413] |
| Multi-shot scheme | **0.546,** [0.426, 0.653] |

The proposed method thus augments text read by users, be it a child reading a children's story, or an adult reading a foreign-language news bulletin, or a person with a learning disability. Therefore, the proposed method is advantageously integrated into the daily reading diet of users. The proposed method could be used to annotate books to motivate children who are learning to read. A plugin, such as a browser plugin, based on the proposed method would be equally attractive to adults - to anyone reading text in a language they're not fully proficient in, including native-speaker adults with learning disabilities, dyslexia, etc. It would be feasible to deploy the proposed technology in the form of a browser plugin or an application programming interface (API) that can annotate ebooks.

While the invention has been illustrated and described in detail in the drawings and foregoing description, such illustration and description are to be considered illustrative or exemplary and not restrictive, the invention being not limited to the disclosed embodiment. Other embodiments and variants are understood, and can be achieved by those skilled in the art when carrying out the claimed invention, based on a study of the drawings, the disclosure and the appended claims. Further variants may be obtained by combining the teachings of any of the examples explained above.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A computer-implemented method for translating an input text element (3) into a sequence of characters comprising a set of graphical symbols, the method comprising:
- selecting (12) one or more words out of the input text element (3) as pre-processed or unprocessed to be translated to obtain a word selection, the selection being carried out based on one or more selection criteria;
- marking (12) the word selection;
- translating (13) the word selection identified by the marking into at least a set of graphical symbols by using an artificial intelligence language model considering the context of the word selection in the pre-processed text element to dynamically translate the word selection based on the context to obtain a translated word selection, wherein a given word in the word selection is translated into a sequence of at least two graphical symbols; and
- displaying (15) the input text element as translated to a user, wherein the input text element as translated comprises the translated word selection.

2. The method according to claim 1, wherein the method further comprises the step of pre-processing (11) the input text element (3) to identify a set of words in the input text element (3) suitable for translation to thereby obtain a pre-processed text element, and wherein the one or more words are selected from the pre-processed text element.

3. The method according to claim 1, wherein the word selection comprises one or more individual words and/or one or more sequences of consecutive individual words.

4. The method according to claim 1, wherein the context of the respective selected word in the word selection comprises at least one word or sentence preceding the respective selected word and at least one word or sentence following the respective selected word.

5. The method according to claim 1, wherein the translation of the word selection comprises stochastically translating the word selection into a plurality of translation candidates each comprising a set of candidate graphical symbols, assessing the translation quality of the translation candidates by using a utility function to assign a translation score to each one of the translation candidates, and including only the translation candidate with the best utility score in the translated word selection.

6. The method according to claim 5, wherein the utility function considers one or more of the following aspects: guessability of the meaning of a given translation candidate to the user, length of a given translation candidate, user's familiarity with a given translation candidate, and user's previous exposure to a given translation candidate.

7. The method according to claim 1, wherein the one or more selection criteria are based on the user's ability to understand and/or remember the correct meaning of the respective word in the pre-processed text element, and/or wherein the one or more selection criteria relate to one or more of the following aspects: difficulty of the respective word in the input text element to be read or understood by the user, translation quality of the word selection, and a spaced repetition mechanism according to which a given word out of the pre-processed text element is selected at uneven intervals.

8. The method according to claim 1, wherein the method further comprises assessing (14) the translation quality of the set of graphical symbols and if the translation quality is insufficient, then forming a feedback loop to select one or more other words out of the pre-processed text element to obtain one or more other word selections, translating the one or more other word selections into at least one or more other sets of graphical symbols, and once the translation quality of the respective set of graphical symbols is determined to be sufficient, only then including the respective set of graphical symbols in the translated word selection, wherein optionally the translation quality is assessed by an artificial intelligence engine configured to simulate a human reader.

9. The method according to claim 1, wherein the displayed input text element as translated comprises the word selection that is used to obtain the respective set of graphical symbols included in the translated word selection.

10. The method according to claim 1, wherein the translated word selection replaces in the displayed input text element as translated the word selection that is used to obtain the respective set of graphical symbols included in the translated word selection.

11. The method according to claim 10, wherein the translated word selection is only displayed to the user if a given action is triggered.

12. The method according to claim 11, wherein the given action comprises the user hovering a cursor above the word selection that is used to obtain the respective set of graphical symbols included in the translated word selection.

13. The method according to claim 1, wherein the graphical symbols are emojis, and/or wherein in addition to the context, the dynamic translation of the word selection considers one or more of the following aspects: user's age, user's nationality, user's geographical location, time of the day, user's cultural background, and user's language skills.

14. A non-transitory computer program product comprising instructions for implementing the steps of the method according to claim 1 when loaded and run on computing means of a data processing device.

15. An apparatus (1) for translating an input text element into a sequence of characters comprising a set of graphical symbols, the apparatus comprising:
- a selection module (4) for selecting one or more words out of the input text element (3) as pre-processed or unprocessed to be translated to obtain a word selection, the selection being carried out based on one or more selection criteria, the selection module being further configured to mark the word selection;
- a translation module (5) for translating the word selection identified by the marking into at least a set of graphical symbols by using an artificial intelligence language model considering the context of the word selection in the pre-processed text element to dynamically translate the word selection based on the context to obtain a translated word selection, wherein a given word in the word selection is translated into a sequence of at least two graphical symbols; and
- a display module (6) for displaying the input text element as translated to a user, wherein the input text element as translated comprises the translated word selection.
